# EUROPÄISCHE PATENTSCHRIFT

(11) **EP 0 933 711 B1**
(45) Veröffentlichungstag und Bekanntmachung des Hinweises auf die Patenterteilung: **20.12.2006**
(21) Anmeldenummer: 99101118.0
(22) Anmeldetag: 21.01.1999
(51) Int. Cl.: G06F 12/06, G06F 13/40, G06F 13/42

(54) **Anordnung und Verfahren zum Bereitstellen von Daten zur Charakterisierung von verschiedenen Einheiten an einem Bussystem**
Method and aparatus of data delivery for characterising different units in a bus system
Méthode et dispositif de fourniture de données pour caractériser différentes unités dans un système de bus

(30) Priorität: 29.01.1998 DE 19803484
(43) Veröffentlichungstag der Anmeldung: 04.08.1999
(73) Patentinhaber: Infineon Technologies AG, 81669 München (DE)
(72) Erfinder: Kock, Ernst-Josef Dr., 85614 Kirchseeon (DE)
(74) Vertreter: Jannig, Peter

(56) Entgegenhaltungen:
- EP-A- 0 281 999
- GB-A- 2 221 328
- US-A- 4 991 085
- US-A- 5 530 887
- US-A- 5 655 148
- US-A- 5 758 099
- DIGITAL EQUIPMENT CO.: "Digital Semiconductor 21140A PCI Fast Ethernet LAN Controller. Hardware Reference Manual. Preliminary" HARDWARE REFERENCE MANUAL, [Online] Januar 1996 (1996-01), Seiten 3-1-3-51, XP002242750 Gefunden im Internet: <URL:http://www.mit.edu/afs/sipb/contrib/d oc/specs/ic/network/dc21140a.pdf> [gefunden am 2003-05-28]
- "USB UNIVERSAL SERIAL BUS SPECIFICATION VERSION 1.0" UNIVERSAL SERIAL BUS (USB), XX, XX, 15. Januar 1996 (1996-01-15), Seiten 1-268, XP002917782

## Beschreibung

Die vorliegende Erfindung betrifft eine Anordnung gemäß dem Oberbegriff des Patentanspruchs 1 und ein Verfahren gemäß dem Oberbegriff des Patentanspruchs 7, d.h. eine Anordnung und ein Verfahren zum Bereitstellen von Daten zur Charakterisierung eines Endpunktes eines Universal-Serial-Bus-Systems.

Der Universal Serial Bus (USB) ist ein insbesondere für den Einsatz in Computern ausgelegtes Bussystem und wird dort hauptsächlich für die Kommunikation zwischen dem Computer und daran angeschlossenen Peripheriegeräten wie beispielsweise der Maus, dem Drucker etc. verwendet.

Die an den USB angeschlossenen Einheiten (Endpunkte) verfügen jeweils über einen die jeweilige Einheit charakterisierenden Datensatz, welcher verschiedene Informationen über die jeweilige Einheit selbst (deren Adresse, deren Art, etc.) und über die Kommunikation mit anderen Einheiten enthält. Der die jeweiligen Einheiten charakterisierende Datensatz wird verwendet, um festzustellen, ob die betreffende Einheit durch eine empfangene Datenanforderung angesprochen ist, und auf welche Weise im Bedarfsfall auf die Datenanforderung zu reagieren ist.

Die Erfahrung zeigt, daß die Bereitstellung der eine Einheit charakterisierenden Daten insbesondere dann, wenn die betreffende Einheit flexibel einsetzbar oder betreibbar sein soll, mit einem relativ hohen Aufwand verbunden ist.

In der EP-A-0 281 999 ist beschrieben, wie in ein Datenverarbeitungssystem eingesteckte Steckkarten für die Ansteuerung von Peripheriegeräten wie beispielsweise Laufwerken, Druckern etc. konfiguriert werden können. Ob und gegebenenfalls wie die von den Steckkarten angesteuerten Peripherlegeräte konfiguriert werden, ist dieser Druckschrift jedoch nicht entnehmbar. Erst recht sind dieser Druckschrift keine Information über das Bereitstellen von einen Entpunkt eines USB-Systems charakterisierenden Daten entnehmbar.

Weitere Druckschriften zum Thema Konfiguration sind die US-A-4 991 085, die US-A-5 655 148, die US-A-5 530 887, sowie DIGITAL EQUIPMENT CO.: "Digital Semiconductor 21140A PCI Fast Ethernet LAN Controller. Hardware Reference Manual. Preliminary" HARDWARE REFERLDTCE MANUAL, [Online] Januar 1996 (1996-O1), Seiten 3-1-3-51, XP002242750 Gefunden im Internet: URL:http://www.mit.edu/afs/sipb/contrib/doc/spees/ic/network/dc21140a.pdf>[gefunden am 2003-05-28].

Der vorliegenden Erfindung liegt daher die Aufgabe zugrunde, die Anordnung gemäß dem Oberbegriff des Patentanspruchs 1 und das Verfahren gemäß dem Oberbegriff des Patentanspruchs 2 derart weiterzubilden, daß der Aufwand zur Bereitstellung der einen Endpunkt charakterisierenden Daten auf ein Minimum reduzierbar ist.

Diese Aufgabe wird erfindungsgemäß durch die in Patentanspruch 1 beanspruchte Anordnung bzw. das in Patentanspruch 7 beanspruchte Verfahren gelöst.

Die erfindungsgemäße Anordnung und das erfindungsgemäße Verfahren zeichnen sich dadurch aus, daß ein Teil der den Endpunkt charakterisierenden Daten in Speicherelementen mit veränderbarem Inhalt gespeichert ist bzw. wird, und daß der andere Teil der den Endpunkt charakterisierenden Daten hardwaremäßig festgelegt ist bzw. wird, und daß Teile der den Endpunkt charakterisierenden Daten (EPₓ₀, EPₓ₁, EPₓ₍ₙ₋₁₎) wahlweise durch variable Daten (B₀-IN, B₁-IN, Bₙ₋₁-IN) oder Daten mit fest eingestelltem Wert gebildet werden.

Sieht man für diejenigen Daten, deren Veränderung für den dadurch charakterisierten Endpunkt nicht erlaubt oder nicht sinnvoll ist, eine hardwaremäßige Festlegung vor, und für diejenigen Daten, deren Veränderung erforderlich oder sinnvoll sein kann, eine Speicherung in Speicherelementen mit veränderbarem Inhalt vor, so ist der betreffende Endpunkt flexibel einsetzbar und betreibbar und dabei - insbesondere wegen der gering haltbaren Anzahl von Speicherelementen - dennoch klein aufbaubar und mit geringem Stromverbrauch und sicher (fehlerunanfällig) betreibbar.

Dadurch, daß Teile der den Endpunkt charakterisierenden Daten wahlweise durch variable Daten oder Daten mit fest eingestelltem Wert gebildet werden, kann eine Anpassung der die gegebenen Verhältnisse charakterisierende Daten an bestimmte Situationen mit minimalem Aufwand erfolgten. Dies ist insbesondere dann sehr verteilhaft, wenn bestimmte Daten nach einem Wechsel der Betriebsart der Einheit (beispielsweise beim Umschalten zwischen dem sogenannten Full-Speed-Device-Betrieb und dem sogenannten Low-Speed-Device-Betrieb) nicht mehr frei wählbar sind, sondern auf vorgeschriebene Werte gesetzt werden müssen.

Dadurch ist der Aufwand zur Bereitstellung der einen Endpunkt eines USB-Systems charakterisierenden Daten auf ein Minimum reduzierbar.

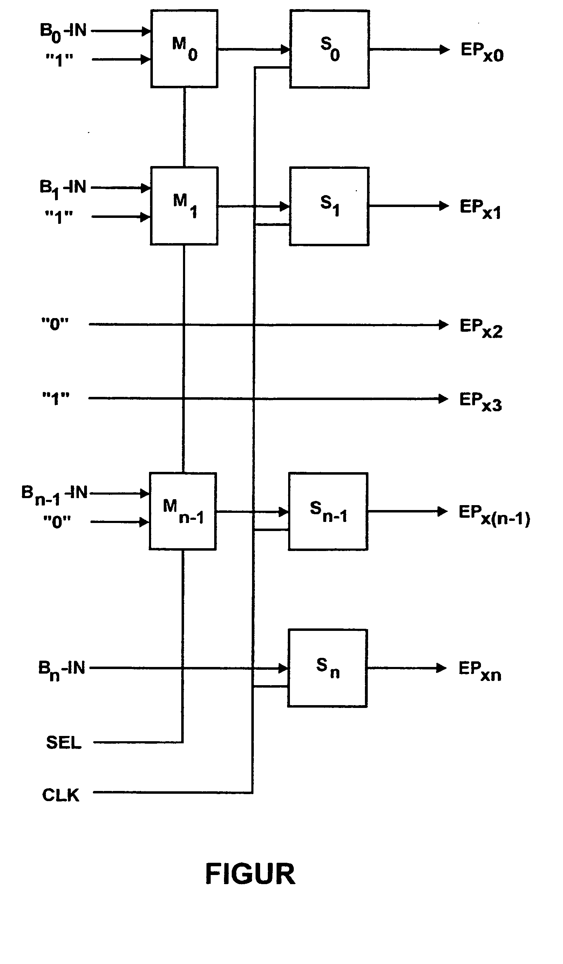

Vorteilhafte Weiterbildungen der Erfindung sind den Unteransprüchen, der folgenden Beschreibung und der Zeichnung entnehmbar.

Die Erfindung wird nachfolgend anhand eines Ausführungsbeispiels unter Bezugnahme auf die Zeichnung näher erläutert.

Die Figur zeigt schematisch eine Anordnung zum Bereitstellen von Daten zur Charakterisierung einer an ein Bussystem angeschlossenen Einheit.

Die nachfolgend näher beschriebene Anordnung und das nachfolgend näher beschriebene Verfahren betreffen das Bereitstellen von Daten zur Charakterisierung von Einheiten (Endpunkten) an einem Universal-Serial-Bus-System (USB-System). Es sei jedoch bereits an dieser Stelle darauf hingewiesen, daß die Anordnung und das Verfahren auch bei anderen Bussystemen zum Einsatz kommen können.

Die Anordnung ist Bestandteil der Einheit, die durch die von der Anordnung bereitgestellten Daten charakterisiert wird; das Verfahren wird in dieser Einheit ausgeführt.

Die besagten Einheiten sind beispielsweise die Maus oder der Drucker eines Computers oder Teile derselben.

Die eine Einheit charakterisierenden Daten (die durch die beschriebene Anordnung bzw. das beschriebene Verfahren bereitgestellten Daten) werden vorliegend verwendet, um festzustellen, ob die betreffende Einheit durch eine empfangene Datenanforderung angesprochen ist, und auf welche Weise im Bedarfsfall auf die Datenanforderung zu reagieren ist; sie (die die betreffende Einheit charakterisierenden Daten) können alternativ oder zusätzlich auch für beliebige andere Zwecke verwendet werden. Unabhängig davon sind die eine Einheit charakterisierenden Daten bei der vorliegend beschriebenen Anordnung und dem vorliegend beschriebenen Verfahren teilweise in Speicherelementen mit veränderbarem Inhalt gespeichert, und teilweise hardwaremäßig festgelegt. Dabei ist für diejenigen Daten, deren Veränderung für die betreffende Einheit nicht erlaubt oder nicht sinnvoll ist, eine hardwaremäßige Festlegung vorgesehen, und für diejenigen Daten, deren Veränderung erforderlich oder sinnvoll sein kann, eine Speicherung in Speicherelementen mit veränderbarem Inhalt vorgesehen.

Eine mögliche praktische Realisierung einer solchen Anordnung ist in der Figur veranschaulicht.

Die die Einheit x, deren Bestandteil die gezeigte Anordnung ist, charakterisierenden Daten sind in der Figur mit EPₓ₀ bis EPₓₙ bezeichnet.

Die Daten EPₓ₂ und EPₓ₃ sind hardwaremäßig festgelegt, wobei EPₓ₂ fest auf niedrigen Pegel (0) gelegt ist, und wobei EPₓ₃ dauerhaft auf hohen Pegel (1) gelegt ist.

Die Daten EPₓ₀, EPₓ₁, EPₓ₍ₙ₋₁₎ und EPₓₙ sind in Speicherelementen mit veränderbarem Inhalt gespeichert. Die besagten Speicherelemente sind in der Figur mit S₀, S₁, Sₙ₋₁ und Sₙ bezeichnet und werden im betrachteten Beispiel durch Flip-Flops gebildet. Es sei jedoch bereits an dieser Stelle darauf hingewiesen, daß die Speicherelemente auch durch beliebige andere Speichereinrichtungen realisiert sein können.

Jedes Speicherelement S₀, S₁, Sₙ₋₁ und Sₙ weist einen Eingangsanschluß zum Anlegen der darin zu speichernden Daten und einen Taktsignalanschluß zum Anlegen eines Taktsignals CLK auf; die Speicherelemente sind dazu ausgelegt, das am Eingangsanschluß anliegende Signal bei einem vorbestimmten Pegel des oder mit einer vorbestimmten Flanke des Taktsignals CLK zu übernehmen und zu speichern.

Das an den Eingangsanschluß des Speicherelements Sₙ angelegte Datum Bₙ-IN ist ein variables Signal, das beispielsweise durch ein in der betreffenden Einheit ausgeführtes Programm erzeugt wird oder von außerhalb der Anordnung (z.B. von einer externen Speichereinrichtung) zugeführt wird; die an die Eingangsanschlüsse der Speicherelemente S₀, S₁ und Sₙ₋₁ angelegten Daten sind von Multiplexern M₀, M₁ und Mₙ₋₁ oder ähnlichen Schalteinrichtungen durchgeschaltete Daten.

An die Multiplexer werden jeweils zwei Signale angelegt, von welchen jeweils eines an den Eingangsanschluß des nachgeschalteten Speicherelements durchgeschaltet wird. Von den zwei Signalen ist das eine ein variables Signal (B₀-IN im Fall von M₀, B₁-IN im Fall von M₁, und Bₙ₋₁-IN im Fall von Mₙ₋₁), und das andere ein dauerhaft auf niedrigem Pegel (im Fall von Mₙ₋₁) oder auf hohem Pegel (im Fall von M₀ und M₁) liegendes Signal. Welches der an den Multiplexern anliegenden Signale an die nachgeschalteten Speicherelemente ausgegeben wird, wird durch ein Multiplexer-Steuersignal bestimmt.

Eine wie in der Figur gezeigt aufgebaute und unter Bezugnahme darauf beschriebene Anordnung zum Bereitstellen von Daten zur Charakterisierung von verschiedenen Einheiten an einem Bussystem erweist sich in zweifacher Hinsicht als vorteilhaft: einerseits, weil nicht für alle der die betreffende Einheit charakterisierenden Daten ein Speicherelement vorgesehen ist, und andererseits, weil die Daten, die in einem Speicherelement gespeichert werden, unter verschiedenen Daten auswählbar sind.

Daß die Anordnung dazu ausgelegt ist, nur einen Teil der Daten in Speicherelementen mit veränderbarem Inhalt zu speichern, hat den Vorteil, daß die Anzahl der vorzusehenden Speicherelemente gering gehalten werden kann. Die Anordnung kann dadurch klein aufgebaut werden und mit wenig Energie und sicher (fehlerunanfällig) betrieben werden. Die Minimierung der Anzahl von Speicherelementen hat andererseits aber keine oder jedenfalls keine wesentliche Einschränkung der Einsetzbarkeit und des Betriebes der die Anordnung enthaltenden Einheit zur Folge, denn es sind ja nur für diejenigen Daten keine Speicherelemente vorgesehen, deren Veränderung nicht erlaubt oder nicht sinnvoll ist.

Daß die Daten, die in einer Speichereinheit gespeichert werden, unter verschiedenen Daten auswählbar sind, hat den Vorteil, daß eine Anpassung der die gegebenen Verhältnisse charakterisierende Daten an bestimmte Situationen mit minimalem Aufwand erfolgen kann. Dies ist insbesondere dann sehr vorteilhaft, wenn bestimmte Daten nach einem Wechsel der Betriebsart der Einheit (beispielsweise beim Umschalten zwischen dem sogenannten Full-Speed-Device-Betrieb und dem sogenannten Low-Speed-Device-Betrieb) nicht mehr frei wählbar sind, sondern auf vorgeschriebene Werte gesetzt werden müssen; eine solche Umschaltung kann im günstigsten Fall durch Umschalten von nur einem einzigen Signal, nämlich des Multiplexer-Steuersignals SEL, also denkbar einfach und schnell erfolgen.

Die in der Figur gezeigte und unter Bezugnahme darauf beschriebene Anordnung ist in vielerlei Hinsicht variierbar.

So kann beispielsweise vorgesehen werden, die Anordnung dazu auszulegen, daß diese beim Laden der vorhandenen Speicherelemente mit den die betreffende Einheit charakterisierenden Daten auch für diejenigen Teile der Daten, die hardwaremäßig festgelegt oder auf festgelegte Werte eingestellt sind, variable Daten empfängt oder zu empfangen scheint, ohne sie jedoch weiter zu verwenden. Dadurch kann die Anordnung kompatibel zu Anordnungen gemacht werden, bei welchen für alle Daten Speicherelemente vorgesehen sind.

Weiterhin kann vorgesehen werden, daß insbesondere die zur Speicherung in den Speicherelementen vorgesehenen Daten nicht die eigentlich auszugebenden, sondern codierte Daten sind, die vor deren Ausgabe aus der Anordnung beispielsweise unter Verwendung von Tabellen oder sonstigen Zuordnungsvorschriften erst in die die betreffende Einheit charakterisierenden Daten umgesetzt werden. Dadurch kann in der Regel erreicht werden, daß die Anzahl der Speicherelemente noch geringer wird als es ohnehin schon der Fall ist.

Ferner besteht auch keine Einschränkung darauf, die erwähnten Multiplexer oder vergleichbare Umschalteinrichtungen wie in der Figur gezeigt vor den Speicherelementen anzuordnen. Sie können den Speicherelementen auch nachgeschaltet sein, wobei dann das Ausgangssignal des Speicherelementes und das auf einen festen Wert eingestellte Signal als Eingangssignale an den Multiplexer angelegt werden und dem Speicherelement unabhängig von der gewählten Betriebsart nur immer das variable Signal als Eingangssignal zugeführt wird; das Ausgangssignal EPₓₓ der Anordnung ist dann das Ausgangssignal des Multiplexers. Wenn und so lange vom Multiplexer das auf einen festen Wert eingestellte Signal ausgegeben wird, ist es dann möglich, das zur Speicherung des variablen Signals vorgesehene Speicherelement abzuschalten oder nur noch eingeschränkt zu betreiben (beispielsweise nicht mehr mit dem Taktsignal CLK zu beaufschlagen), wodurch die Anordnung schonender und mit geringerem Energieaufwand betreibbar ist.

Wenn die auf einen festen Wert eingestellten Signale an den Set- oder Reset-Eingang der vorliegend die Speicherelemente bildenden Flip-Flops gelegt werden und die betreffenden Speicherelemente für die Zeit, während welcher das auf den festen Wert eingestellte Signal ausgegeben werden soll, nicht mit dem Taktsignal CLK beaufschlagt wird, kann auf die Multiplexer sogar verzichtet werden.

Als vorteilhaft kann es sich auch erweisen, wenn die auf die festen Werte eingestellten Daten so gewählt werden, daß dadurch ein Nicht-Vorhandensein der durch die Daten charakterisierten Einheit signalisiert (vorgetäuscht) wird. Dadurch kann auf einfache Weise mit hoher Wahrscheinlichkeit verhindert werden, daß eine Funktionsstörung der durch die Daten charakterisierten Einheit automatisch einen Ausfall oder eine Blockierung des gesamten Systems zur Folge hat.

Die beschriebene Anordnung und das beschriebene Verfahren ermöglichen es unabhängig von den Einzelheiten deren praktischer Realisierung, den Aufwand zur Bereitstellung der eine Einheit an einem Bussystem charakterisierenden Daten gering zu halten.

### Bezugszeichenliste

- B₀-IN - Bₙ-IN: der Anordnung zugeführte Daten
- EPₓ₀ - EPₓₙ: von der Anordnung ausgegebene Daten

- M₀ - Mₙ: Multiplexer
- S₀ - Sₙ: Speicherelemente

- SEL: Multiplexer-Steuersignal
- CLK: Taktsignal

## Patentansprüche

1. Anordnung zum Bereitstellen von Daten zur Charakterisierung eines Endpunktes eines Universal-Serial-Bus-Systems,
**dadurch gekennzeichnet,**
**daß** ein Teil der den Endpunkt charakterisierenden Daten (EPₓ₀, EPₓ₁, EPₓ₍ₙ₋₁₎, EPₓₙ) in Speicherelementen (S₀, S₁, Sₙ₋₁, Sₙ) mit veränderbarem Inhalt gespeichert ist, und daß der andere Teil der den Endpunkt charakterisierenden Daten (EPₓ₂, EPₓ₃) hardwaremäßig festgelegt ist und
**daß** Teile der den Endpunkt charakterisierenden Raten (EPₓ₀, EPₓ₁, EPₓ₍ₙ₋₁₎) wahlweise durch variable Daten (B₀-IN, B₁-IN, Bₙ₋₁-IN) oder Daten mit fest eingestellte Wert gebildet werden.

2. Anordnung nach Anspruch 1,
**dadurch gekennzeichnet,**
**daß** die Daten (EPₓ₀, EPₓ₁, EPₓ₍ₙ₋₁₎, EPₓₙ), die in den Speicherelementen (S₀, S₁, Sₙ₋₁, Sₙ) gespeichert werden, durch ein in dem durch die Daten charakterisierten Endpunkt ablaufendes Programm erzeugt oder von einer externen Speichereinrichtung zugeführt werden.

3. Anordnung oder Verfahren nach einem der vorhergehenden Ansprüche,
**dadurch gekennzeichnet,**
**daß** ausgewählten Speicherelementen (S₀, S₁, Sₙ₋₁) ein Multiplexer (M₀, M₁, Mₙ₋₁) vor- oder nachgeschaltet ist, der dazu ausgelegt ist, wahlweise die variablen Daten (B₀-IN, B₁-IN, Bₙ₋₁-IN) oder die Daten mit fest eingestelltem Wert durchzuschalten.

4. Anordnung nach einem der vorhergehenden Ansprüche,
**dadurch gekennzeichnet,**
**daß** die Anordnung dazu ausgelegt ist, auch für diejenigen Teile der Daten (EPₓ₂, EPₓ₃), die hardwaremäßig festgelegt sind, variable Daten zu empfangen.

5. Anordnung nach einem der vorhergehenden Ansprüche,
**dadurch gekennzeichnet,**
**daß** insbesondere die in den Speicherelementen (S₀, S₁, Sₙ₋₁, Sₙ) gespeicherten Daten codierte Daten sind, die erst vor ihrer Ausgabe in die den betreffenden Endpunkt charakterisierenden Daten umgesetzt werden.

6. Anordnung nach einem der vorhergehenden Ansprüche,
**dadurch gekennzeichnet,**
**daß** die hardwaremäßig festgelegten Daten und/oder die auf feste Werte eingestellten Daten so gewählt sind, daß durch diese dem Empfänger derselben ein Nicht-Vorhandensein des durch diese charakterisierten Endpunktes signalisiertwird.

7. Verfahren zum Bereitstellen von Daten zur Charakterisierung eines Endpunktes eines Universal-Serial-Bus-Systems,
**dadurch gekennzeichnet,**
**daß** ein Teil der dem Endpunkt charakterisierenden Daten (EPₓ₀, EPₓ₁, EPₓ₍ₙ₋₁₎, EPₓₙ) in Speicherelementen (S₀, S₁, Sₙ₋₁, Sₙ) mit veränderbarem Inhalt gespeichert wird, und daß der andere Teil der den Endpunkt charakterisierenden Daten (EPₓ₂, EPₓ₃) hardwaremäßig festgelegt wird, und
**daß** Teile der den Endpunkt charakterisierenden Daten (EPₓ₀, EPₓ₁, EPₓ₍ₙ₋₁₎) wahlweise durch variable Daten (B₀-IN, B₁-IN, Hₙ₋₁-IN) oder Daten mit fest eingestelltem Wert gebildet werden.

8. Verfahren nach Anspruch 7,
**dadurch gekennzeichnet,**
**daß** die Daten (EPₓ₀, EPₓ₁, BPₓ₍ₙ₋₁₎, EPₓₙ), die in den Speicherelementen (S₀, S₁, Sₙ₋₁, Sₙ) gespeichert werden, durch ein in dem durch die Daten charakterisierten Endpunkt ablaufendes Programm erzeugt oder von einer externen Speichereinrichtung zugeführt werden.

9. Verfahren nach Anspruch 7 oder 8,
**dadurch gekennzeichnet,**
**daß** auch für diejenigen Teile der Daten (EPₓ₂, EPₓ₃), die hardwaremäßig festgelegt sind, variable Daten empfangen werden können.

10. Verfahren nach einem der Ansprüche 7 bis 9,
**dadurch gekennzeichnet,**
**daß** insbesondere die in den Speicherelementen (S₀, S₁, Sₙ₋₁, Sₙ) gespeicherten Daten codierte Daten sind, die erst vor ihrer Ausgabe in die den betreffenden Endpunkt charakterisierenden Daten umgesetzt werden.

11. Verfahren nach einem der Ansprüche 7 bis 10,
**dadurch gekennzeichnet,**
**daß** die hardwaremäßig festgelegten Daten und/oder die auf feste Werte eingestellten Daten so gewählt sind, daß durch diese dem Empfänger derselben ein Nicht-Vorhandensein des durch diese charakterisierten Endpunktes signalisiert wird.

## Claims

1. Arrangement for providing data for characterization of an end point of a Universal Serial Bus System, **characterized in that** some of the data (EPₓ₀, EPₓ₁, EPₓ₍ₙ₋₁₎, EPₓₙ) which characterizes the end point is stored in memory elements (S₀, S₁, Sₙ₋₁, Sₙ) having a variable content, and **in that** the rest of the data (EPₓ₂, EPₓ₃) which characterizes the end point is defined by hardware, and
**in that** some of the data (EPₓ₀, EPₓ₁, EPₓ₍ₙ₋₁₎) which characterizes the end point is optionally formed by variable data (B₀-IN, B₁-IN, Bₙ₋₁-IN) or by data with a permanently set value.

2. Arrangement according to Claim 1 **characterized in that** the data (EPₓ₀, EPₓ₁, EPₓ₍ₙ₋₁₎, EPₓₙ) which is stored in the memory elements (S₀, S₁, Sₙ₋₁, Sₙ) is produced by means of a program which runs in the end point which is **characterized by** the data, or is supplied from an external memory device.

3. Arrangement or method according to one of the preceding claims, **characterized in that** selected memory elements (S₀, S₁, Sₙ₋₁) are connected upstream or downstream of a multiplexer (M₀, M₁, Mₙ₋₁) which is designed to optionally pass through the variable data (B₀-IN, B₁-IN, Bₙ₋₁-IN) or the data with a permanently set value.

4. Arrangement according to one of the preceding claims, **characterized in that** the arrangement is designed to receive variable data for those portions of the data (EPₓ₂, EPₓ₃) which are defined by hardware, as well.

5. Arrangement according to one of the preceding claims, **characterized in that**, in particular, the data which is stored in the memory elements (S₀, S₁, Sₙ₋₁, Sₙ) is coded data which, before being output, are converted to the data which characterizes the relevant end point.

6. Arrangement according to one of the preceding claims, **characterized in that** the data which is defined by hardware and/or the data which is set to permanent values is chosen such that the absence of the end point which is **characterized by** said data is signalled by said data to the receiver thereof.

7. Method for providing data for characterization of an end point of a Universal Serial Bus System, **characterized in that** some of the data (EPₓ₀, EPₓ₁, EPₓ₍ₙ₋₁₎, EPₓₙ) which characterizes the end point is stored in memory elements (S₀, S₁, Sₙ₋₁, Sₙ) having a variable content, and **in that** the rest of the data (EPₓ₂, EPₓ₃) which characterizes the end point is defined by hardware, and
**in that** some of the data (EPₓ₀, EPₓ₁, EPₓ₍ₙ₋₁₎) which characterizes the end point is optionally formed by variable data (B₀-IN, B₁-IN, Bₙ₋₁-IN) or by data with a permanently set value.

8. Method according to Claim 7,
**characterized**
**in that** the data (EPₓ₀, EPₓ₁, EPₓ₍ₙ₋₁₎, EPₓₙ) which is stored in the memory elements (S₀, S₁, Sₙ₋₁, Sₙ) is produced by means of a program which runs in the end point which is **characterized by** the data, or is supplied from an external memory device.

9. Method according to Claim 7 or 8,
**characterized**
**in that** variable data can be received for those portions of the data (EPₓ₂, EPₓ₃) which are defined by hardware, as well.

10. Method according to one of Claims 7 to 9,
**characterized**
**in that**, in particular, the data which is stored in the memory elements (S₀, S₁, Sₙ₋₁, Sₙ) is coded data, which is converted, before being output, are to the data which characterizes the relevant end point.

11. Method according to one of Claims 7 to 10,
**characterized**
**in that** the data which is defined by hardware and/or the data which is set to permanent values is chosen such that the absence of the end point which is **characterized by** said data is signalled by said data to the receiver thereof.

## Revendications

1. Dispositif de fourniture de données pour caractériser un point final d'un système universel de bus en série,
**caractérisé en ce que**
une partie des données caractérisant le point final (EPₓₒ, EPₓ₁, EPₓ₍ₙ₋₁₎, EPₓₙ) est stockée dans des éléments de stockage (Sₒ, S₁, Sₙ₋₁, Sₙ) aux contenus variables et **en ce que** l'autre partie des données (EPₓ₂, EPₓ₃) caractérisant le point final est définie par l'installation matérielle et
**en ce que** des parties des données (EPₓ₀, EPₓ₁, EPₓ₍ₙ₊₁₎) caractérisant le point final sont formées au choix par des données variables (B₀-IN, B₁-IN, Bₙ₋₁-IN) ou des données à valeur fixe réglée.

2. Dispositif selon la revendication 1,
**caractérisé en ce que**
les données (EPₓₒ, EPₓ₁, EPₓ₍ₙ₋₁₎, EPₓₙ), qui sont stockées dans les éléments de stockage (Sₒ, S₁, Sₙ₋₁, Sₙ), sont produites par un programme aboutissant au point final **caractérisé par** les données ou sont introduites à partir d'un dispositif de stockage externe.

3. Dispositif ou procédé selon une des revendications précédentes,
**caractérisé en ce que**
un multiplexeur (M₀, M₁, Mₙ₋₁) est branché en amont ou en aval des éléments de stockage sélectionnés (S₀, S₁, Sₙ₋₁), lequel est conçu de manière à connecter directement au choix les données variables (B₀-IN, B₁-IN, Bₙ₋₁-IN) ou les données à valeur fixe réglée.

4. Dispositif selon une des revendications précédentes,
**caractérisé en ce que**
le dispositif est conçu de manière à recevoir des données variables également pour les parties des données (EPₓ₂, EPₓ₃) qui sont définies par l'installation matérielle.

5. Dispositif selon une des revendications précédentes,
**caractérisé en ce que**
notamment les données stockées dans les éléments de stockage (S₀, S₁, Sₙ₋₁, Sₙ) sont des données codées, qui sont converties juste avant leur émission en données caractérisant le point final concerné.

6. Dispositif selon une des revendications précédentes,
**caractérisé en ce que**
les données définies par l'installation matérielle et/ou les données réglées à des valeurs fixes sont choisies de telle sorte qu'il soit signalisé au moyen de celles-ci au récepteur des mêmes données une non-présence du point final **caractérisé par** celles-ci.

7. Procédé de fourniture de données pour caractériser un point final d'un système de bus en série universel,
**caractérisé en ce que**
une partie des données (EPₓ₀, EPₓ₁, EPₓ₍ₙ₋₁₎, EPₓₙ) caractérisant le point final est stockée dans des éléments de stockage (S₀, S₁, Sₙ₋₁, Sₙ) aux contenus variables et **en ce que** l'autre partie des données (EPₓ₂, EPₓ₃) caractérisant le point final est définie par l'installation matérielle et
**en ce que** des parties des données (EPₓ₀, EPₓ₁, EPₓ₍ₙ₊₁₎) caractérisant le point final sont formées au choix par des données variables (B₀-IN, B₁-IN, Bₙ₋₁-IN) ou des données à valeur fixe réglée.

8. Procédé selon la revendication 7,
**caractérisé en ce que**
les données (EPₓₒ, EPₓ₁, EPₓ₍ₙ₋₁₎, EPₓₙ), qui sont stockées dans les éléments de stockage (S₀, S₁, Sₙ₋₁, Sₙ), sont produites par un programme aboutissant au point final **caractérisé par** les données ou sont introduites à partir d'un dispositif de stockage externe.

9. Procédé selon la revendication 7 ou 8,
**caractérisé en ce que**
des données variables peuvent être reçues également pour les parties des données (EPₓ₂, EPₓ₃) qui sont définies par l'installation matérielle.

10. Procédé selon une des revendications 7 à 9,
**caractérisé en ce que**
notamment les données stockées dans les éléments de stockage (S₀, S₁, Sₙ₋₁, Sₙ) sont des données codées, qui sont converties juste avant leur émission en données caractérisant le point final concerné.

11. Procédé selon une des revendications 7 à 10,
**caractérisé en ce que**
les données définies par l'installation matérielle et/ou les données réglées à des valeurs fixes sont choisies de telle sorte qu'il soit signalisé au moyen de celles-ci au récepteur des mêmes données une non-présence du point final **caractérisé par** celles-ci.
